# EUROPEAN PATENT APPLICATION

(11) **EP 4 643 747 A1**
(43) Date of publication of application: **05.11.2025**
(21) Application number: 23910476.3
(22) Date of filing: 25.12.2023
(51) Int. Cl.: A47L 11/24

(54) **DATA PROCESSING METHOD AND APPARATUS FOR CLEANING DEVICE, AND STORAGE MEDIUM AND CLEANING DEVICE**

(30) Priority: 30.12.2022 CN 202211740267
(71) Applicant: Beijing Roborock Innovation Technology Co., Ltd., Beijing 102206 (CN)
(72) Inventor: XIAO, Fujian, Beijing 102200 (CN); HOU, Zhengtao, Beijing 102200 (CN); PAN, Yafeng, Beijing 102200 (CN)
(74) Representative: Cabinet Beau de Loménie
(86) International application number: PCT/CN2023/141502
(87) International publication number: WO 2024/140550

(57) **Abstract**

Disclosed are a data processing method and apparatus for a cleaning device, and a storage medium and a cleaning device. The method comprises: acquiring the total cleaning area of at least one region to be cleaned; acquiring an actual cleaning area, which is obtained by means of exploration when a cleaning device executes a cleaning action in the at least one region to be cleaned; updating the total cleaning area on the basis of the actual cleaning area; and by means of the updated total cleaning area, calculating a first remaining cleaning area, in which the cleaning device has not yet executed the cleaning action, of the at least one region to be cleaned.

## Description

### CROSS-REFERENCE TO RELATED APPLICATION

The present disclosure claims priority to Chinese Patent Application No. 202211740267.5, filed on December 30, 2022, which is incorporated herein by reference in its entirety as a part of the present application.

### TECHNICAL FIELD

The present disclosure relates to the field of data processing technologies and, in particular, to a data processing method and apparatus of a cleaning device, a storage medium and a cleaning device.

### BACKGROUND ART

Currently, a cleaning device automatically returns to its charging station to recharge after its battery level falls below a preset value. In such a situation, the cleaning device automatically calculates the remaining area to be cleaned based on historical cleaning records, and calculates the amount of power needed for recharging based on this remaining cleaning area. Once the required amount of power has been recharged into the cleaning device, the device resumes cleaning from the point where it left off. Such a process can greatly boost overall cleaning efficiency. However, since the historical cleaning records remain unchanged, the required amount of power estimated using the historical cleaning records will deviate significantly from reality if the user's home environment has undergone substantial changes. As a result, the calculated amount of power needed for recharging is not accurate, diminishing the user experience. Consequently, how to improve the cleaning device's ability to accurately determine the remaining cleaning area is a technical problem that needs to be solved urgently.

### SUMMARY OF THE INVENTION

Embodiments of the present disclosure provide a data processing method and apparatus of a cleaning device, a storage medium and a cleaning device, which can, to a certain extent, improve the accuracy of the cleaning device in calculating the remaining cleaning area, improve the intelligent level of the cleaning device and enhance the use experience of the cleaning device for the user.

Other features and advantages of the present disclosure will become apparent by the following detailed description, or will be acquired, in part, by the practice of the present disclosure.

According to a first aspect of the present disclosure, a data processing method of a cleaning device is provided. The method includes: obtaining a total cleaning area of at least one region to be cleaned; obtaining an actual cleaned area explored by the cleaning device in performing a cleaning action in the at least one region to be cleaned; updating the total cleaning area based on the actual cleaned area; and calculating, using the total cleaning area as updated, a first remaining cleaning area of the at least one region to be cleaned, where the cleaning device has not yet performed a cleaning action in the first remaining cleaning area.

According to a second aspect of the present disclosure, a data processing apparatus of a cleaning device is provided. The apparatus includes: a first obtaining unit configured to obtain a total cleaning area of at least one region to be cleaned; a second obtaining unit configured to obtain an actual cleaned area explored by the cleaning device in performing a cleaning action in the at least one region to be cleaned; an updating unit configured to update the total cleaning area based on the actual cleaned area; and a calculating unit configured to calculate, using the total cleaning area as updated, a first remaining cleaning area of the at least one region to be cleaned, where the cleaning device has not yet performed a cleaning action in the first remaining cleaning area.

According to a third aspect of the present disclosure, a computer-readable storage medium is provided. The computer-readable storage medium stores computer program instructions which can be loaded and executed by a processor to cause the processor to implement the operations of the method according to the first aspect.

According to a fourth aspect of the present disclosure, a cleaning device is provided. The cleaning device includes: a processor and a memory, where the memory stores computer program instructions which can be executed by the processor to cause the processor to implement the operations of the method according to the first aspect.

It should be understood that the above general description and the detailed descriptions that follow are merely exemplary and explanatory and do not limit the present disclosure.

### BRIEF DESCRIPTION OF THE DRAWINGS

The accompanying drawings, which are herein incorporated into and form a part of the specification, illustrate embodiments consistent with the present disclosure and are used in conjunction with the specification to explain the principles of the present disclosure. Apparently, the accompanying drawings in the following description show some embodiments of the present disclosure, and those of ordinary skill in the art may still derive other drawings from these accompanying drawings without creative efforts. In the drawings:
FIG. 1 shows a flow chart of a data processing method of a cleaning device according to some embodiments of the present disclosure;
FIG. 2 is a schematic scene of a region to be cleaned shown in FIG. 1;
FIG. 3 is a block diagram of a data processing apparatus of a cleaning device according to some embodiments of the present disclosure; and
FIG. 4 is a schematic structural diagram of a computer system of a cleaning device according to some embodiments of the present disclosure.

### DETAILED DESCRIPTION

Exemplary embodiments will now be described more fully with reference to the accompanying drawings. However, the exemplary embodiments are capable of being implemented in a variety of forms and should not be construed as being limited to the examples set forth herein. Rather, the provision of these embodiments allows for the present disclosure to be more comprehensive and complete and conveys the idea of the exemplary embodiments in a comprehensive manner to those skilled in the art.

In addition, the described features, structures, or characteristics may be combined in one or more embodiments in any suitable manner. In the following description, many specific details are provided, thereby giving a full understanding of the embodiments of the present disclosure. However, those skilled in the art will realize that it is possible to practice the technical solutions of the present disclosure without one or more of the specific details, or that other methods, components, devices, steps and the like may be employed. In other cases, the publicly known methods, devices, implementations, or operations are not shown or described in detail to avoid obscuring aspects of the present disclosure.

The block diagrams shown in the accompanying figures are merely functional entities and do not necessarily have to correspond to physically separate entities. That is, the functional entities may be implemented in a software form, or in one or more hardware modules or integrated circuits, or in different networks and/or processor devices and/or microcontroller devices.

The flowcharts shown in the accompanying drawings are exemplary illustrations only and are not required to include all of the elements and operations/steps, nor are they required to be performed in the order depicted. For example, some operations/steps may also be decomposed, while others may be combined or partially combined, and thus the order in which they are actually performed may change depending on the actual situation.

In the description of the present disclosure, it is to be understood that the term "a plurality of" means two or more. The term "and/or" used herein merely describes an associative relationship between related objects, indicating three possible scenarios. For example, "A and/or B" may represent: A alone, both A and B together, or B alone. Additionally, the character "/" in this document generally signifies an "or" relationship between the preceding and following associated objects.

It should be understood that although terms such as "first", "second" and the like may be used in the specification and claims of the present disclosure to distinguish between similar objects and need not be used to describe a particular order or sequence. It should be understood that the objects so used may be interchangeable, where appropriate, so that the embodiments of the present disclosure described herein can be implemented in an order other than those illustrated or described in the drawings.

To make the objectives, technical solutions, and advantages of the present disclosure clearer, the following provides a detailed description in conjunction with the accompanying drawings. Apparently, the described embodiments are only a part of the embodiments of the present disclosure, rather than all of them. All other embodiments obtained by those of ordinary skill in the art based on the embodiments of the present disclosure without creative efforts shall fall within the protection scope of the present disclosure.

Some embodiments of the present disclosure will be described in detail below in conjunction with the accompanying drawings. Without conflict, the following embodiments and features in the embodiments may be combined with each other.

It is to be noted that the present disclosure proposes cleaning devices that are intelligent devices capable of performing cleaning actions, including but not limited to intelligent cleaning devices such as sweeping robots.

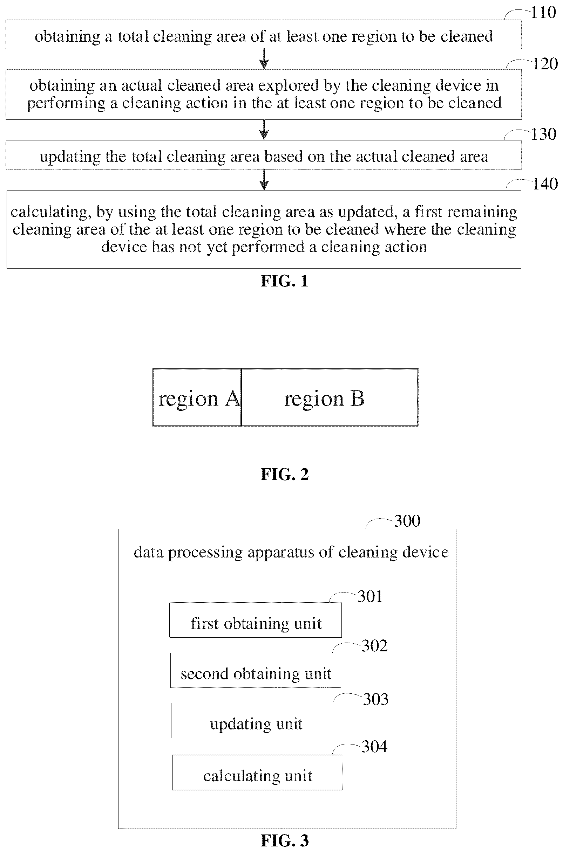

Referring to FIG. 1, a flow chart illustrating a data processing method of a cleaning device according to some embodiments of the present disclosure may include steps 110 to 140.

In step 110, a total cleaning area of at least one region to be cleaned is obtained.

In some embodiments, a cleaning device may operate in three modes of operation when cleaning a home environment: global cleaning, region-selective cleaning, and zoned cleaning. Assuming that a home environment includes a living room, a bedroom, and a kitchen; the living room, the bedroom, and the kitchen will be cleaned if the user selects the global cleaning mode. Understandably, there is only one region to be cleaned in the global cleaning mode (i.e., the living room, bedroom, and kitchen as a whole are the region to be cleaned); if the user selects the region-selective cleaning mode, one or more regions in the living room, bedroom, and kitchen will be cleaned (i.e., if the user selects the living room and the bedroom, the living room and the bedroom are the regions to be cleaned, respectively).

If the user selects the zoned cleaning mode, one or more regions in the living room, the bedroom, and the kitchen may be selected as the regions to be cleaned, i.e., instead of controlling the cleaning device to perform a cleaning action on the regions in the room as a whole, the cleaning device determines the regions to be cleaned based on the user's personal preference. The present disclosure does not limit the manner of determining the region to be cleaned, or the number of regions to be cleaned.

In embodiments of the present disclosure, by setting multiple cleaning modes, various usage needs of the user can be met, thereby improving the usage experience of the user.

In some embodiments, the obtaining the total cleaning area of the at least one region to be cleaned may be performed in accordance with steps 111 to 114 as follows.

In step 111, a preset cleaning round for each region to be cleaned is obtained.

In order to enable a person skilled in the art to better understand the present embodiment, cleaning rounds will be exemplified below in conjunction with FIG. 2.

Referring to FIG. 2, a schematic diagram of a scene of the region to be cleaned in FIG. 1 is shown, with the scene illustrated in FIG. 2 being a user selecting regions A and B as the regions to be cleaned for the current cleaning task performed by the cleaning device.

The number of cleaning rounds (i.e., the number of cleanings) for regions A and B may be defined. In some embodiments, 2 cleaning rounds may be set for region A (i.e., region A corresponds to 2 cleaning rounds) and 2 cleaning rounds for region B (i.e., region B corresponds to 2 cleaning rounds). The setting of the number of cleaning rounds for each region to be cleaned can be determined according to the user's preference, or according to the user's historical setting record, or automatically set by the cleaning device, and the present disclosure does not limit the setting manner of the number of cleaning rounds herein.

In step 112, a scanned map for each region to be cleaned and a cleaning map explored by the cleaning device in performing a cleaning action on each region to be cleaned in history are obtained.

In some embodiments, the scanned map may be a SLAM (Simultaneous Localization And Mapping) map. The obtaining of the scanned map may be the obtaining of a scanned map of each region to be cleaned in history (e.g., a scanned map of each region to be cleaned obtained from a previous cleaning task). The obtaining of the scanned map may also be the scanned map of each region to be cleaned obtained by scanning each region to be cleaned at the beginning of the current cleaning task. The scanned map may be obtained by scanning each region to be cleaned at the beginning of the current cleaning task. The present disclosure does not limit the specific ways of obtaining the scanned maps.

At the end of a cleaning task performed on the region to be cleaned, a cleaning map corresponding to the region to be cleaned is obtained, the area of the cleaning map being equal to the area that has been covered by the cleaning device in the course of performing cleaning tasks on the region to be cleaned. In the present disclosure, the cleaning map historically explored during the execution of a cleaning action for each of the regions to be cleaned may be a cleaning map of each of the regions to be cleaned explored during a previous cleaning task; or it may be a cleaning map of each of the regions to be cleaned obtained by preprocessing a plurality of initial cleaning maps of each of the regions to be cleaned explored during a plurality of cleaning tasks in history.

In step 113, a reference region area of each region to be cleaned is determined based on a ratio of a region area of the region to be cleaned defined by the scanned map to a region area of the region to be cleaned defined by the cleaning map.

It should be noted that the scanned map will correspond to a number of scanning points, and likewise the cleaning map will also correspond to a number of cleaning points. In some embodiments, the area corresponding to one scanning point may be used to determine the area of the region to be cleaned as defined by the scanned map, and the area corresponding to one cleaning point may be used to determine the area of the region to be cleaned as defined by the cleaning map. Assuming that the area corresponding to one scanning point and one the cleaning point are both 25 square centimeters, if the scanned map corresponds to 2,000 scanning points, the area of the region to be cleaned as defined by the scanned map is 5 square meters. If the cleaning map corresponds to 400 cleaning points, the area of the region to be cleaned as defined by the cleaning map is 1 square meter.

In some embodiments, the determining a reference region area for each region to be cleaned based on a ratio of a region area of the region to be cleaned defined by the scanned map to a region area of the region to be cleaned defined by the cleaning map may include a first embodiment and a second embodiment as follows.

A first embodiment is that if the ratio is greater than a preset ratio, the area of the region to be cleaned defined by the scanned map is determined to be a reference region area of the region to be cleaned.

In some embodiments, the preset ratio may be set to 2. If, as determined in the example given above, the area of the region to be cleaned as defined by the scanned map is 5 square meters and the area of the region to be cleaned as defined by the cleaning map is 1 square meter, then it may be determined that a ratio of the region area of the region to be cleaned as defined by the scanned map to the region area of the region to be cleaned as defined by the cleaning map is greater than the preset ratio (i.e., 5:1>2), and the area of the region to be cleaned defined by the scanned map (i.e., 5 square meters) may be determined as a reference region area of the region to be cleaned.

A second embodiment is that if the ratio is less than or equal to a preset ratio, the area of the region to be cleaned defined by the cleaning map is determined as the reference region area of the region to be cleaned.

In some embodiments, the preset ratio may be set to 2. Assuming that the area of the region to be cleaned defined by the scanned map is 4 square meters and the area of the region to be cleaned defined by the cleaning map is 3 square meters, then the ratio of the region area of the region to be cleaned defined by the scanned map to that defined by the cleaning map is less than or equal to a preset ratio (i.e., 4:3 < 2), then the area of the region to be cleaned defined by the cleaning map (i.e., 3 square meters) may be determined as the reference region area of the region to be cleaned.

In this embodiment, determining a reference region area of the region to be cleaned by traversing the scanned map and the cleaning map can improve the determination accuracy of the reference region area.

In step 114, the total cleaning area of the at least one region to be cleaned is calculated based on the preset cleaning round and the reference region area of each region to be cleaned.

Continuing to refer to FIG. 2, if the set number of cleaning rounds for the region A is 2 and the reference region area of the region A is 5 square meters, then it can be determined that the total cleaning area for region A is 10 square meters (5*2); and if the set number of cleaning rounds for the region B is 2 and the reference region area of the region B is 10 square meters, then it can be determined that the total cleaning area for region B is 20 square meters (10*2). The total cleaning area of at least one of the regions to be cleaned is 30 square meters by adding the total cleaning area of 10 square meters in region A and that of 20 square meters in region B.

Continuing to FIG. 1, in step 120, an actual cleaned area explored by the cleaning device during the execution of a cleaning action in the at least one region to be cleaned is obtained.

It should be noted that the actual cleaned area is the cumulative area of the region explored by the cleaning device during the execution of a cleaning action in the at least one region to be cleaned. Continuing to refer to FIG. 2, assume that the preset number of cleaning rounds for region A is 2, and that the cleaning device performs a cleaning action on region A first, and then performs a cleaning action on region B. When the cleaning device performs the first round of cleaning action on region A to explore the area of region A, which is 4 square meters, and in the process of performing the second round of cleaning action on region A to explore the area of region A, which is 2 square meters, then the actual cleaned area at this time is 6 square meters (i.e., 4+2). It is to be understood that the actual cleaned area comprises the area of the region explored by the cleaning device during the current execution of the cleaning action on each region to be cleaned.

Continuing to refer to FIG. 1, in step 130, the total cleaning area is updated based on the actual cleaned area.

In some embodiments, specific implementation of updating the total cleaning area based on the actual cleaned area may be performed in accordance with steps 131 to 132 as follows.

In step 131, upon completion of at least one round of cleaning action performed by the cleaning device on any one of the regions to be cleaned, an area of the region to be cleaned explored by the cleaning device in which the cleaning action has been performed is obtained as a target region area.

Referring to FIG. 2, assuming that the set number of cleaning rounds for region A is 2, if the cleaning device explores an area of region A of 4 square meters by the time it completes the first cleaning round of region A, the target region area at that time is 4 square meters. If the area of the region A explored by the cleaning device is 5 square meters after completion of the second cleaning round of region A, the target region area at this point in time is 5 square meters.

In step 132, the total cleaned area is updated based on the target region area.

In some embodiments, the updating the total cleaning area based on the target region area may include: recalculating a total cleaning area of the at least one region to be cleaned based on the preset cleaning round, a target region area of a region to be cleaned where the cleaning device has performed a cleaning action, and a reference region area of a region to be cleaned where the cleaning device has not performed a cleaning action.

In order to provide those skilled in the art with a better understanding of the present embodiment, examples will be provided below in conjunction with FIG. 2.

Assuming that the set number of cleaning rounds for region A is 2, the set number of cleaning rounds for region B is 2, the reference region area for region A is 5 square meters, and the reference region area for region B is 10 square meters, the total cleaning area will be 5*2 + 10*2 = 30 square meters. If the cleaning device cleans area A first and then cleans region B, the target region area of region A explored after the first cleaning round is completed for region A is 4 square meters.

In some embodiments, if the cleaning device is at the point when the first round of cleaning rounds has been completed for region A, the target region area of region A explored by the cleaning device is replaced with the reference region area corresponding to the current cleaning round in which the cleaning device performs a cleaning action on region A, as well as the reference region area corresponding to the remaining cleaning rounds in which a cleaning action has not been performed on region A, in order to obtain the updated total cleaned area, whereupon the updated total cleaning area is 44+4+10*2=28 square meters. It can be understood that the target region area (4 square meters) of region A replaces the reference region area (5 square meters) corresponding to the first round of cleaning in region A, and also replaces the reference region area (5 square meters) corresponding to the second round of cleaning in region A.

In other embodiments, if the cleaning device is at the point when the first round of cleaning rounds has been completed for region A, the explored target region area of region A is replaced with the reference region area corresponding to the current cleaning round in which the cleaning device performs a cleaning action on region A (i.e., the reference region area corresponding to the remaining cleaning rounds in which a cleaning action is not performed on region A is not replaced), to obtain an updated total cleaning area, whereupon the updated total cleaning area is 4+5+10*2=29 square meters. It can be understood that the target region area (4 square meters) of region A replaces the reference region area (5 square meters) corresponding to the first cleaning round of region A, but does not replace the reference region area (5 square meters) corresponding to the second cleaning round of region A.

It will be appreciated that the accuracy of the calculation of the remaining cleaning area is improved in this embodiment if the first implementation is used. The present disclosure is not limited to specific implementations for recalculating the total cleaning area of the at least one region to be cleaned.

Continuing to refer to FIG. 1, in step 140, a first remaining cleaning area for which the cleaning device has not yet performed a cleaning action in the at least one region to be cleaned is calculated by using the updated total cleaning area.

In some embodiments, the calculating, by using the updated total cleaning area, a first remaining cleaning area in the at least one region to be cleaned where the cleaning device has not yet performed a cleaning action can include: calculating an area difference between the updated total cleaning area and the actual cleaned area, and determining the area difference as a first remaining cleaning area in the at least one region to be cleaned where the cleaning device has not yet performed a cleaning action.

In some embodiments, if the updated total cleaning area is 28 square meters, and the actual cleaned area explored during the execution of a cleaning action by the cleaning device in the at least one region to be cleaned is 14 square meters, then the remaining cleaning area is 28-14=14 square meters.

It is to be understood that if the user's home environment changes, then determining the total cleaning area based on the reference region area of the region to be cleaned will be inaccurate, and accordingly, the remaining cleaning area obtained will also be inaccurate. In this embodiment, if the user's home environment changes, then it is possible that the target region area of the region to be cleaned obtained by the cleaning device upon completion of a round of cleaning of the region to be cleaned may be different from the reference region area of the region to be cleaned, and at this time, updating the total cleaning area based on the target region area will improve the accuracy of the cleaning device in calculating the first remaining cleaning area.

Continuing to refer to FIG. 1, after step 140, i.e., after calculating the first remaining cleaning area of the cleaning device in the at least one region to be cleaned for which a cleaning action has not yet been performed by the cleaning device by using the updated total cleaning area, the data processing method of the cleaning device may further comprise steps 141 to 142.

In step 141, an energy consumption factor of the cleaning device is obtained, the energy consumption factor being used to characterize the energy consumed by the cleaning device to perform a cleaning action in a unit area.

It is to be noted that the energy consumption factor may be determined by using the total energy consumed by the last N performed cleaning actions / the total cleaning area obtained by the last N performed cleaning actions. The energy includes a type of energy such as electricity.

In step 142, predetermined energy is determined based on the energy consumption factor and the first remaining cleaning area, the predetermined energy being used to characterize the energy required by the cleaning device to perform a cleaning action in the first remaining cleaning area.

In some embodiments, the predetermined energy = first remaining cleaning area * energy dissipation factor * M, wherein M is a caching factor, which may take a value in the range of 1-1.5. The purpose of M as a caching factor is to prevent the cleaning device from draining energy for a back and forth travelling trip to allow the cleaning device to charge a little bit more energy, leaving enough energy to spare.

It should be noted that if the cleaning device monitors its currently stored energy in real time during the course of performing a cleaning task on the at least one region to be cleaned, and if the currently stored energy of the cleaning device decreases to a predetermined energy value, such as to 5% of the maximum amount of energy that can be stored by the cleaning device, then predetermined energy will be automatically determined based on the energy consumption factor, the first remaining cleaning area, and the caching factor. And the cleaning device is controlled to return to the energy recharging pile for energy recharging, and the cleaning device is recharged in accordance with the predetermined energy when the cleaning device is recharged at the energy recharging pile.

After the cleaning device is recharged to the predetermined energy, it continues to return to the breakpoint position for cleaning, which can greatly improve the comprehensive cleaning efficiency and enhance the user experience.

Continuing to refer to FIG. 1, after step 140, i.e., after calculating, by using the updated total cleaning area, a first remaining cleaning area in the at least one region to be cleaned where the cleaning device has not yet performed a cleaning action, the data processing method of the cleaning device may further comprise steps 1401 to 1402.

In step 1401, a cleaning speed of the cleaning device is obtained, the cleaning speed being used to characterize the time period consumed by the cleaning device to perform a cleaning action in a unit area.

It should be noted that the cleaning speed may be determined by the total time period consumed by the last N executions of the cleaning action / the total cleaned area obtained by the last N executions of the cleaning action. The cleaning speed is generated for the cleaning device performing a mopping action.

In step 1402, when the actual cleaning time period consumed by the cleaning device to perform a cleaning action in the at least one region to be cleaned reaches a preset time period, a first remaining cleaning time period is determined based on the cleaning speed and the first remaining cleaning area, and whether the cleaning device needs to perform backwashing is determined based on the first remaining cleaning time period, the first remaining cleaning time period being used to characterize the time period taken by the cleaning device to perform a cleaning action in the first remaining cleaning area. The first remaining cleaning time period is the mopping time period required for the first remaining cleaning area.

In some embodiments, the first remaining cleaning time period = first remaining cleaning area * cleaning speed * M, wherein M is a caching factor, which may range from 1-1.5. M as a caching factor is intended to satisfy the user's need to perform fine mopping of the first remaining cleaning area, and then the corresponding first remaining cleaning time period may be set aside sufficiently.

In some embodiments, the preset time period may be a backwashing interval (e.g., 20 minutes) set in advance by the user. In conjunction with FIG. 2, if the cleaning device records that the mopping time period generated (i.e., the actual cleaning time period consumed) by the cleaning device reaches the user-set backwashing interval while the cleaning device performs a cleaning action on regions A and B, then at that time, if it is determined that the first remaining cleaning time period is greater than the first preset time period, the cleaning device is directly controlled to carry out backwashing.

Accordingly, at this time, if it is determined that the first remaining cleaning time period is less than or equal to the first preset time period, the cleaning device is controlled to continue to perform the cleaning action, i.e., there is no need for backwashing, and the cleaning device can be allowed to perform backwashing after completing the cleaning action for the whole regions A and B. In some embodiments, the first preset time period may be determined based on the backwashing interval. For example, the first preset time period may be set = backwashing interval * 0.2.

In some embodiments, the backwashing interval is determined to be 20 minutes, and when the cleaning device reaches 20 minutes in the course of performing a cleaning action on the at least one region to be cleaned, the first remaining cleaning time period is automatically calculated based on the first remaining cleaning area. Based on the backwashing interval * 0.2, it is determined that 4 minutes is required to reach the first preset time period. If the first remaining cleaning time period is determined to be 2 minutes at this time, then the cleaning device at this time does not need to reclean; if the first remaining cleaning time period is determined to be 6 minutes at this time, then the cleaning device at this time needs to perform backwashing.

In some embodiments, if the actual cleaning time period consumed by the cleaning device in the at least one region to be cleaned reaches a preset time period, but it is determined that the first remaining cleaning time period is less than or equal to the first preset time period, the cleaning device continues to perform the cleaning action on the at least one region to be cleaned. However, in practice, during the continuation of performing the cleaning action on the at least one region to be cleaned, the actual cleaning time period consumed by performing the cleaning action on the at least one region to be cleaned may be much larger due to a change of the home environment, so a cleaning time period threshold may be set (which in some embodiments may be 1.5 times of the backwashing time interval). When the cleaning device continues to perform the cleaning action on the at least one region to be cleaned, if the actual cleaning time period consumed is monitored to reach the cleaning time period threshold, then the cleaning device is directly controlled to carry out backwashing. It is to be understood that this cleaning time period threshold is a maximum tolerance for the cleaning device not to need to perform backwashing.

Continuing to refer to FIG. 1, after step 140, i.e. after calculating, by using the updated total cleaning area, a first remaining cleaning area in the at least one region to be cleaned where the cleaning device has not yet performed a cleaning action, the data processing method of the cleaning device may further comprise steps 150 to 160.

In step 150, when the actual cleaning time period consumed by the cleaning device to perform a cleaning action in the at least one region to be cleaned reaches a preset time period, a second remaining cleaning area in a current region to be cleaned in which the cleaning device has not yet performed a cleaning action is calculated by using the updated total cleaning area.

In step 160, a second remaining cleaning time period is determined based on the cleaning speed of the cleaning device and the second remaining cleaning area, and whether the cleaning device needs to perform backwashing is determined based on the second remaining cleaning time period, the second remaining cleaning time period being used to characterize the time period taken by the cleaning device to perform a cleaning action in the second remaining cleaning area.

In some embodiments, the second remaining cleaning time period = second remaining cleaning area * cleaning speed * M, wherein M is a caching factor, which may take a value in the range of 1-1.5. The purpose of M as a caching factor is to satisfy the user's need to perform fine mopping of the second remaining cleaning area, and then the corresponding second remaining cleaning time period may be set aside sufficiently.

In some embodiments, the preset time period may be a backwashing interval (e.g., 20 minutes) set by the user in advance.

In order to enable a person skilled in the art to better understand the present embodiment, examples will be given below in conjunction with FIG. 2.

As shown in FIG. 2, assuming that the set number of cleaning rounds for region A is 2, and the set number of cleaning rounds for region B is 2, the cleaning device first performs a cleaning action for region A, and then performs a cleaning action for region B. In the process of performing a first round of cleaning in region B by the cleaning device, if it is determined that the actual cleaning time period (i.e., the cumulative cleaning time period) consumed by the cleaning device in the course of performing the cleaning actions for regions A and B reaches the user-set backwashing interval, then at this time, if the second remaining cleaning area in region B in which the cleaning action has not yet been performed is greater than the first preset time period, the cleaning device is directly controlled to carry out backwashing.

Accordingly, at this time, if the second remaining cleaning area in region B in which the cleaning action has not yet been performed is less than or equal to the first preset time period, then the cleaning device is controlled to continue to perform the cleaning action, i.e., there is no need to carry out backwashing, and the cleaning device can be allowed to carry out backwashing after completing a first round of cleaning for region B. In some embodiments, the first preset time period may be determined based on the backwashing interval. For example, the first preset time period may be set = backwashing interval * 0.2.

In some embodiments, the backwashing interval time period is determined to be 20 minutes, and when the actual cleaning time period consumed by the cleaning device to perform a cleaning action in the at least one region to be cleaned reaches 20 minutes, a second remaining cleaning time period is automatically calculated. Based on the backwashing interval * 0.2, it is determined that 4 minutes is required to reach the first preset time period. If the second remaining cleaning time period is determined to be 2 minutes at this time, then the cleaning device at this time does not need to reclean; if the second remaining cleaning time period is determined to be 6 minutes at this time, then the cleaning device at this time needs to perform backwashing.

In some embodiments, if the actual cleaning time period consumed by the cleaning device to perform a cleaning action in the at least one region to be cleaned reaches a preset time period, but it is determined that the second remaining cleaning time period is less than or equal to the first preset time period, then the cleaning device continues to perform the cleaning action on the current region to be cleaned. However, in practice, in the course of continuing to perform the cleaning action on the current region to be cleaned, the actual cleaning time period consumed by performing the cleaning action on the at least one region to be cleaned may be much larger due to a change of the home environment, so a cleaning time period threshold may be set (which in some embodiments may be 1.5 times of the backwashing interval). When the cleaning device continues to perform the cleaning action on the at least one region to be cleaned, if the actual cleaning time period consumed is monitored to reach the cleaning time period threshold, then the cleaning device is directly controlled to carry out backwashing. It is to be understood that this cleaning time period threshold is a maximum tolerance for the cleaning device not to need to perform backwashing.

Continuing to refer to FIG. 1, after step 140, i.e., after calculating, by using the updated total cleaning area, a first remaining cleaning area in the at least one region to be cleaned where the cleaning device has not yet performed a cleaning action, the data processing method of the cleaning device may further comprise step 170.

In step 170, upon completion of a cleaning action by the cleaning device performed on any one of the at least one region to be cleaned, a cumulative cleaning time period of the cleaning device since the last time the cleaning device completed a backwashing action is obtained, and whether the cleaning device needs to perform backwashing is determined based on the cumulative cleaning time period.

In some embodiments, a second preset time period (e.g., 2 minutes) may be set to determine whether the cleaning device needs to perform backwashing. If the cumulative cleaning time period is greater than the second preset time period, the cleaning device is controlled to perform backwashing directly, and if the cumulative cleaning time period is less than or equal to the second preset time period, the cleaning device does not perform backwashing and continues to perform the cleaning action.

As shown in FIG. 2, assuming that the second preset time period is preset to be 2 minutes, the set number of cleaning rounds for region A is 2, the set number of cleaning rounds for region B is 2, and the cleaning device first performs a cleaning action for region A, and then performs a cleaning action for region B. When the cleaning device finishes performing the first round of cleaning for region A, if the cleaning device generates a cumulative cleaning time period of 1 minute in region A, then at this time the cleaning device does not need to perform backwashing and continues to perform the second round of cleaning action on the region A. When the cleaning device has completed the second round of cleaning in region A, if the cumulative cleaning time period generated is 2.5 minutes, then the cleaning device at this time needs to perform backwashing. The cumulative cleaning time period will be recalculated as the cleaning device continues to perform cleaning actions in region B after the backwashing is completed.

In this embodiment, based on different cleaning scenarios, by setting up different ways to judge whether the cleaning device needs to carry out backwashing, it makes it possible to make a more intelligent decision on whether the cleaning device needs to carry out backwashing, so as to improve the cleaning efficiency of the cleaning device, and to improve the user's experience.

In the technical solution provided by the embodiments of the present disclosure, first a total cleaning area of at least one region to be cleaned is obtained; then an actual cleaned area explored by the cleaning device while performing a cleaning action in the at least one region to be cleaned is obtained; then the total cleaning area is updated based on the actual cleaned area; and finally by using the updated total cleaning area, a first remaining cleaning area in the at least one region to be cleaned where the cleaning device has not yet performed a cleaning action is calculated. Based on this, the technical solution provided in the present disclosure is capable of updating and calculating the first remaining cleaning area in the at least one region to be cleaned in real time. Compared to the implementation of using historical cleaning record to determine the remaining cleaning area of the current cleaning task, the technical solution proposed in the present disclosure is capable of updating the total cleaning area according to the changes in the home environment, so as to calculate the first remaining cleaning area more accurately. On the one hand, the present disclosure can, to a certain extent, improve the accuracy of the cleaning device in calculating the amount of power required to carry out charging, and on the other hand, it can also improve the accuracy of the cleaning device in determining whether to carry out re-cleaning during the cleaning process, thereby improving the intelligence level of the cleaning device and enhancing the user's experience in using the cleaning device.

The following describes apparatus embodiments of the present disclosure that can be used to perform a data processing method of a cleaning device of the above embodiments of the present disclosure. For details not disclosed in the apparatus embodiments of the present disclosure, reference is made to the embodiments of the data processing method of the cleaning device described above in the present disclosure.

FIG. 3 illustrates a block diagram of a data processing apparatus of a cleaning device according to some embodiments of the present disclosure.

Referring to FIG. 3, the data processing apparatus 300 of the cleaning device may include: a first obtaining unit 301, a second obtaining unit 302, an updating unit 303, and a calculation unit 304.

The first obtaining unit 301 is configured to obtain a total cleaning area of at least one region to be cleaned; the second obtaining unit 302 is configured to obtain an actual cleaned area explored by the cleaning device in performing a cleaning action in the at least one region to be cleaned; the updating unit 303 is configured to update the total cleaning area based on the actual cleaned area; and the calculating unit 304 is configured to, by using the updated total cleaning area, calculate a first remaining cleaning area in the at least one region to be cleaned where the cleaning device has not yet performed a cleaning action.

In some embodiments, the first obtaining unit 301 is further configured to: obtain a preset cleaning round for each region to be cleaned; obtain a scanned map for each region to be cleaned and a cleaning map explored by the cleaning device in performing a cleaning action on each region to be cleaned in history; determine a reference region area of each region to be cleaned based on a ratio of a region area of the region to be cleaned defined by the scanned map to a region area of the region to be cleaned defined by the cleaning map; and calculate the total cleaning area of the at least one region to be cleaned based on the preset cleaning round and the reference region area of each region to be cleaned.

In some embodiments, the first obtaining unit 301 is further configured to: if the ratio is greater than a preset ratio, determine the area of the region to be cleaned defined by the scanned map as a reference region area of the region to be cleaned; and if the ratio is less than or equal to the preset ratio, determine the area of the region to be cleaned defined by the cleaning map as a reference region area of the region to be cleaned. In some embodiments, the actual cleaned area includes an area of the region explored by the cleaning device during the current cleaning action performed on each region to be cleaned; and the updating unit 303 is further configured to: upon completion of at least one round of cleaning action by the cleaning device performed on any one of the regions to be cleaned, obtain an area of the region to be cleaned and explored by the cleaning device in which the cleaning action has been performed as a target region area; and update the total cleaning area based on the target region area.

In some embodiments, the updating unit 303 is further configured to: recalculate a total cleaning area of the at least one region to be cleaned based on the preset cleaning round, a target region area of a region to be cleaned where the cleaning device has performed a cleaning action, and a reference region area of a region to be cleaned where the cleaning device has not performed a cleaning action.

In some embodiments, the calculating unit 304 is further configured to: calculate an area difference between the updated total cleaning area and the actual cleaned area, and determine the area difference as a first remaining cleaning area in the at least one region to be cleaned where the cleaning device has not yet performed a cleaning action.

In some embodiments, the calculating unit 304 is further configured to: obtain an energy consumption factor of the cleaning device, the energy consumption factor being used to characterize the energy consumed by the cleaning device to perform a cleaning action in a unit area; and determine predetermined energy based on the energy consumption factor and the first remaining cleaning area, the predetermined energy being used to characterize the energy required by the cleaning device to perform a cleaning action in the first remaining cleaning area.

In some embodiments, the calculating unit 304 is further configured to: obtain a cleaning speed of the cleaning device, the cleaning speed being used to characterize the time period consumed by the cleaning device to perform a cleaning action in a unit area; and when the actual cleaning time period consumed by the cleaning device to perform a cleaning action in the at least one region to be cleaned reaches a preset time period, determine a first remaining cleaning time period based on the cleaning speed and the first remaining cleaning area, and determine whether the cleaning device needs to perform backwashing based on the first remaining cleaning time period, the first remaining cleaning time period being used to characterize the time period taken by the cleaning device to perform a cleaning action in the first remaining cleaning area.

In some embodiments, the calculating unit 304 is further configured to: when the actual cleaning time period consumed by the cleaning device to perform a cleaning action in the at least one region to be cleaned reaches a preset time period, calculate a second remaining cleaning area in a current region to be cleaned in which the cleaning device has not yet performed a cleaning action, by using the updated total cleaning area; and determine a second remaining cleaning time period based on the cleaning speed of the cleaning device and the second remaining cleaning area, and determine whether the cleaning device needs to perform backwashing based on the second remaining cleaning time period, the second remaining cleaning time period being used to characterize the time period taken by the cleaning device to perform a cleaning action in the second remaining cleaning area.

In some embodiments, the calculating unit 304 is further configured to: upon completion of a cleaning action by the cleaning device performed on any one of the at least one region to be cleaned, obtain a cumulative cleaning time period of the cleaning device since the last time the cleaning device completed a backwashing action, and determine whether the cleaning device needs to perform backwashing based on the cumulative cleaning time period.

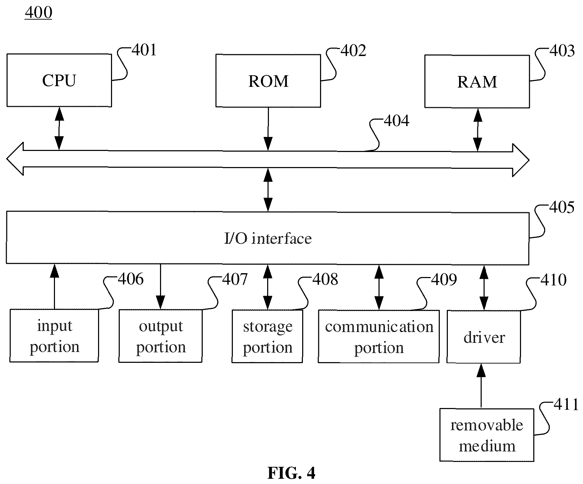

FIG. 4 is a schematic structural diagram of a computer system of a cleaning device according to some embodiments of the present disclosure.

It should be noted that the computer system 400 of the cleaning device shown in FIG. 4 is only an example, and does not limit the functions and use scope of the embodiments of the present disclosure.

As shown in FIG. 4, the computer system 400 includes a central processing unit (Central Processing Unit, CPU) 401 which may perform various appropriate actions and processes, such as performing the methods described in the above embodiments, based on a program stored in a read-only memory (Read-Only Memory, ROM) 402 or loaded from a storage portion 408 into a random-access memory (Random Access Memory, RAM) 403. Various programs and data necessary for system operation are also stored in the RAM 403. The CPU 401, the ROM 402, and the RAM 403 are connected to each other via a bus 404. An input/output (Input/Output, I/O) interface 405 is also connected to the bus 404.

The following components may be connected to the I/O interface 405: an input portion 406 including a keyboard, a mouse and the like; an output portion 407 including, for example, a cathode ray tube (Cathode Ray Tube, CRT), a liquid crystal display (Liquid Crystal Display, LCD), a speaker and the like; a storage portion 408 including a hard disk and the like; and a communication portion 409 including a network interface card such as an LAN (Local Area Network, LAN) card, or a modem. The communication portion 709 performs communication processing via a network such as the Internet. A driver 410 is also connected to the I/O interface 405 as needed. A removable medium 411, such as a disk, an optical disk, a magnetic disk, a semiconductor memory, etc., is installed on the driver 410 as needed, such that computer programs as read from the removable medium 411 may be installed into the storage portion 408 as needed.

In particular, according to embodiments of the present disclosure, the process described below with reference to the flowchart may be implemented as a computer software program. For example, embodiments of the present disclosure include a computer program product including a computer program carried on a computer-readable medium, and the computer program includes program codes for performing the method shown in the flowchart. In such an embodiment, the computer program may be downloaded and installed from the network via the communication portion 409, and/or from the removable medium 411. The computer program, when executed by the CPU 401, performs the aforesaid functions as defined in the system of the present disclosure.

It should be noted that the computer-readable medium shown in the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, apparatus or device, or any combination thereof. Specific examples of the computer-readable storage medium may include, but are not limited to: an electrical connector with one or more wires, a portable computer disk, a hard disk, a random access memory (RAM), a read-only memory (ROM), an erasable programmable read-only memory (erasable programmable read-only memory, EPROM), a flash memory, an optical fiber, a portable compact disk read-only memory (compact disk read-only memory, CD-ROM), an optical storing device, a magnetic storing device, or any suitable combination thereof. In the present disclosure, the computer-readable storage medium may be any tangible medium that includes or stores a program, and the program may be adopted by or in combination with an instruction executing system, apparatus or device. However, in the present disclosure, the computer-readable signal medium may include a data signal propagated in a baseband or as part of a carrier wave that carries computer-readable program codes. The data signals as propagated may take a variety of forms, including but not limited to electromagnetic signals, optical signals, or any suitable combination thereof. The computer-readable signal medium may also be any computer-readable medium other than a computer-readable storage medium, that sends, propagates, or transmits a program as adopted by or in combination with the instruction executing system, apparatus or device. The program codes included in the computer-readable medium may be transmitted via any suitable medium, including but not limited to a wireless mode, a wire, a fiber optic cable, RF, etc., or any suitable combination thereof.

The flowcharts and block diagrams in the accompanying drawings illustrate the architecture, functionality, and operations as possibly achieved by the system, method, and computer program product according to various embodiments of the present disclosure. At this point, each block in the flowchart or block diagram may represent a module, program segment, or portion of code, and the module, program segment, or portion of code includes one or more executable instructions for implementing a prescribed logical function. It shall also be noted that, in some embodiments as replacements, the functions indicated in the blocks may also occur in an order different from the order indicated in the accompanying drawings. For example, two blocks represented one after the other may actually be executed in substantially parallel, and they may sometimes be executed in the opposite order depending on the function as involved. It shall be further noted that each block in the block diagram or flowchart and the combination of blocks in the block diagram or flowchart may be implemented with a dedicated hardware-based system that performs the specified function or operation, or may be implemented with a combination of dedicated hardware and computer instructions.

The units described in embodiments of the present disclosure may be implemented either by means of software or by means of hardware. The units as described may also be provided in a processor. The names of these units do not limit the modules themselves under certain circumstances.

As another aspect, the present disclosure further provides a computer program product or computer program, the computer program product or computer program comprising computer instructions that are stored in a computer-readable storage medium. A processor of the computer device reads the computer instructions from the computer-readable storage medium, and the processor executes the computer instructions such that the computer device performs the data processing method of the cleaning device described in the above embodiments.

As another aspect, the present disclosure further provides a computer-readable medium which may be included in the cleaning device described in the aforesaid embodiments, or may be present alone and not assembled into the cleaning device. The computer-readable medium carries one or more programs that, when executed by the cleaning device, enables the cleaning device to perform the data processing method of the cleaning device described in the above embodiments.

It should be noted that although a number of modules or units of the device for action execution are mentioned in the detailed description above, this division is not mandatory. In fact, according to embodiments of the present disclosure, the features and functions of two or more modules or units described above may be specified in a single module or unit. Conversely, the features and functions of one module or unit described above may be further divided to be specified by a plurality of modules or units.

By the above description of the embodiments, it is readily understood by those skilled in the art that the example embodiments described herein can be implemented either by software or by software in combination with the necessary hardware. Accordingly, the technical solutions according to the presently disclosed embodiments may be embodied in the form of a software product that may be stored in a non-volatile storage medium (which may be a CD-ROM, a USB flash drive, a removable hard drive, etc.) or on a network, comprising a number of instructions to cause a computing device (which may be a personal computer, a server, a touch terminal, or a network device, etc.) to perform the methods according to the presently disclosed embodiments.

Other embodiments of the present disclosure will readily come to mind to those skilled in the art upon consideration of the specification and practice of the embodiments disclosed herein. The present disclosure is intended to cover any variations, uses, or adaptations of the present disclosure that follow the general principles of the present disclosure and include common knowledge or customary technical means in the art not disclosed herein.

The present disclosure proposes a technical solution that first a total cleaning area of at least one region to be cleaned is obtained; then an actual cleaned area explored by the cleaning device while performing a cleaning action in the at least one region to be cleaned is obtained; then the total cleaning area is updated based on the actual cleaned area; and finally by using the updated total cleaning area, a first remaining cleaning area in the at least one region to be cleaned where the cleaning device has not yet performed a cleaning action is calculated. Based on this, the technical solution provided in the present disclosure is capable of updating and calculating the first remaining cleaning area in the at least one region to be cleaned in real time. Compared to the implementation of using historical cleaning record to determine the remaining cleaning area of the current cleaning task, the technical solution proposed in the present disclosure is capable of updating the total cleaning area according to the changes in the home environment, so as to calculate the first remaining cleaning area more accurately. On the one hand, the present disclosure can, to a certain extent, improve the accuracy of the cleaning device in calculating the amount of power required to carry out charging, and on the other hand, it can also improve the accuracy of the cleaning device in determining whether to carry out re-cleaning during the cleaning process, thereby improving the intelligence level of the cleaning device and enhancing the user's experience in using the cleaning device.

It should be understood that the present disclosure is not limited to the precise structure that has been described above and illustrated in the accompanying drawings, and that various modifications and changes may be made without departing from its scope. The scope of the present disclosure is limited only by the appended claims.

## Claims

1. A data processing method of a cleaning device, comprising:
obtaining a total cleaning area of at least one region to be cleaned;
obtaining an actual cleaned area explored by the cleaning device in performing a cleaning action in the at least one region to be cleaned;
updating the total cleaning area based on the actual cleaned area; and
calculating, using the total cleaning area as updated, a first remaining cleaning area of the at least one region to be cleaned, wherein the cleaning device has not yet performed a cleaning action in the first remaining cleaning area.

2. The method according to claim 1, wherein the obtaining the total cleaning area of the at least one region to be cleaned comprises:
obtaining a preset cleaning round for each region to be cleaned;
obtaining a scanned map for each region to be cleaned, and a cleaning map explored by the cleaning device in performing a cleaning action on each region to be cleaned in history;
determining, based on a ratio of a region area of a region to be cleaned defined by the scanned map to a region area of the region to be cleaned defined by the cleaning map, a reference region area for each region to be cleaned; and
calculating, based on the preset cleaning round and the reference region area of each region to be cleaned, the total cleaning area of the at least one region to be cleaned.

3. The method according to claim 2, wherein the determining, based on the ratio of the region area of the region to be cleaned defined by the scanned map to the region area of the region to be cleaned defined by the cleaning map, the reference region area for each region to be cleaned comprises:
if the ratio is greater than a preset ratio, determining the region area of the region to be cleaned defined by the scanned map as the reference region area of the region to be cleaned; and
if the ratio is less than or equal to the preset ratio, determining the region area of the region to be cleaned defined by the cleaning map as the reference region area of the region to be cleaned.

4. The method according to claim 3, wherein the actual cleaned area comprises a region area explored by the cleaning device in performing a cleaning action on each region to be cleaned currently; and the updating the total cleaning area based on the actual cleaned area comprises:
upon completion of at least one round of cleaning action performed by the cleaning device in any one region to be cleaned, obtaining a region area explored by the cleaning device in the region to be cleaned where the cleaning action has been performed as a target region area; and
updating the total cleaning area based on the target region area.

5. The method according to claim 4, wherein the updating the total cleaning area based on the target region area comprises:
recalculating the total cleaning area of the at least one region to be cleaned based on the preset cleaning round, the target region area of the region to be cleaned where the cleaning device has performed the cleaning action, and the reference region area of the region to be cleaned where the cleaning device has not performed a cleaning action.

6. The method according to claim 5, wherein the calculating, using the total cleaning area as updated, the first remaining cleaning area of the at least one region to be cleaned where the cleaning device has not yet performed the cleaning action comprises:
calculating an area difference between the total cleaning area as updated and the actual cleaned area, and determining the area difference as the first remaining cleaning area of the at least one region to be cleaned where the cleaning device has not yet performed the cleaning action.

7. The method according to claim 1, wherein after the calculating, using the total cleaning area as updated, the first remaining cleaning area of the at least one region to be cleaned where the cleaning device has not yet performed the cleaning action, the method further comprises:
obtaining an energy consumption factor of the cleaning device, wherein the energy consumption factor is used for characterizing energy consumed by the cleaning device in performing a cleaning action in a unit area; and
determining predetermined energy based on the energy consumption factor and the first remaining cleaning area, wherein the predetermined energy is used for characterizing energy required by the cleaning device to perform the cleaning action in the first remaining cleaning area.

8. The method according to claim 1, wherein after the calculating, using the total cleaning area as updated, the first remaining cleaning area of the at least one region to be cleaned where the cleaning device has not yet performed the cleaning action, the method further comprises:
obtaining a cleaning speed of the cleaning device, wherein the cleaning speed is used for characterizing a time period consumed by the cleaning device in performing a cleaning action in a unit area; and
when an actual cleaning time period consumed by the cleaning device in performing the cleaning action in the at least one region to be cleaned reaches a preset time period, determining a first remaining cleaning time period based on the cleaning speed and the first remaining cleaning area, and determining, based on the first remaining cleaning time period, whether the cleaning device needs to perform backwashing, wherein the first remaining cleaning time period is used for characterizing a time period required by the cleaning device to perform the cleaning action in the first remaining cleaning area.

9. The method according to claim 1, further comprising:
when an actual cleaning time period consumed by the cleaning device in performing the cleaning action in the at least one region to be cleaned reaches a preset time period, calculating, using the total cleaning area as updated, a second remaining cleaning area of a current region to be cleaned where the cleaning device has not yet performed a cleaning action; and
determining a second remaining cleaning time period based on a cleaning speed of the cleaning device and the second remaining cleaning area, and determining, based on the second remaining cleaning time period, whether the cleaning device needs to perform backwashing, wherein the second remaining cleaning time period is used for characterizing a time period required by the cleaning device to perform the cleaning action in the second remaining cleaning area.

10. The method according to claim 1, further comprising:
when the cleaning device completes a cleaning action on any one region to be cleaned of the at least one region to be cleaned, obtaining a cumulative cleaning time period of the cleaning device after last completion of a backwashing action, and determining, based on the cumulative cleaning time period, whether the cleaning device needs to perform backwashing.

11. A data processing apparatus of a cleaning device, comprising:
a first obtaining unit, configured to obtain a total cleaning area of at least one region to be cleaned;
a second obtaining unit, configured to obtain an actual cleaned area explored by the cleaning device in performing a cleaning action in the at least one region to be cleaned;
an updating unit, configured to update the total cleaning area based on the actual cleaned area; and
a calculating unit, configured to calculate, using the total cleaning area as updated, a first remaining cleaning area of the at least one region to be cleaned, where the cleaning device has not yet performed a cleaning action in the first remaining cleaning area.

12. A computer-readable storage medium, wherein the computer-readable storage medium stores a computer program instruction, and the computer program instruction, when loaded and executed by a processor, causes the processor to implement operations performed in the method according to any one of claims 1 to 10.

13. A cleaning device, comprising a processor and a memory, wherein the memory stores a computer program instruction executable by the processor, and when the processor executes the computer program instruction, instructions of the method according to any one of claims 1 to 10 are implemented.
